# EUROPÄISCHE PATENTSCHRIFT

(11) **EP 0 798 173 B1**
(45) Veröffentlichungstag und Bekanntmachung des Hinweises auf die Patenterteilung: **10.01.2001**
(21) Anmeldenummer: 97104571.1
(22) Anmeldetag: 18.03.1997
(51) Int. Cl.: B60R 21/22

(54) **Gassack mit quer zur Längsrichtung einschnürenden Elementen**
Airbag with transverse narrowings
Coussin gonflable à étranglements transversaux

(30) Priorität: 29.03.1996 DE 29605897 U
(43) Veröffentlichungstag der Anmeldung: 01.10.1997
(60) Teilanmeldung: 99116760.2
(73) Patentinhaber: TRW Occupant Restraint Systems GmbH & Co. KG, 73551 Alfdorf (DE)
(72) Erfinder: Acker, Dominique, 73553 Alfdorf (DE)
(74) Vertreter: Degwert, Hartmut, Dipl.-Phys.

(56) Entgegenhaltungen:
- DE-A- 4 307 175
- DE-A- 19 519 297
- DE-C- 4 436 139
- US-A- 5 322 322

## Beschreibung

Die Erfindung betrifft einen Gassack nach dem Oberbegriff des Anspruchs 1.

Ein derartiger Gassack als Teil einer Seitenaufprall-Schutzeinrichtung ist bereits aus der WO 94/19215 bekannt. Dieser Kopf-Gassack ist schlauchförmig ausgebildet und mit seinen seitlichen Enden an der A- und an der B-Säule befestigt. Im zusammengefalteten Zustand erstreckt sich der Gassack unter einer Verkleidung längs der A-Säule über den Dachrahmen bis zur B-Säule, so daß er im wesentlichen bogenförmig im Fahrzeug eingebaut ist. Der Gassack besitzt ein spezielles Gewebe, das beim Aufblasen des Gassacks eine starke Längenverkürzung desselben hervorruft. Beim Entfalten öffnet der Gassack die Verkleidung und erstreckt sich nahezu linear von einem Befestigungsende zum entgegengesetzten.

Der bekannte Gassack stützt sich beim Auftreffen des Kopfes eines Fahrzeuginsassen nicht auf der Seitenscheibe ab, die bei einem Seitenaufprall ohnehin meistens zerstört wird, sondern verspannt sich zwischen seinen seitlichen Enden.

Das spezielle Gewebe macht den bekannten Gassack jedoch relativ teuer. Zudem kann mit diesem Gewebe beim Aufblasen nur eine begrenzte Verkürzung des Gassacks in Längsrichtung erreicht werden.

Aus der DE-C-44 36 139 ist ein Seitenaufprallschutz bekannt, welcher in dem Fahrzeugsitz integriert ist. Ein schlauchförmiger Gassack erstreckt sich in aufgeblasenem Zustand zwischen dem Sitzteil und dem Rückenlehnenteil und hindert damit eine seitliche Verlagerung des Beckenbereichs und schützt insbesondere den Nierenbereich. Einen Kopfschutz bietet dieser Gassack nicht.

Die US-A-3 888 503 zeigt einen aufblasbaren Sicherheitsgurt, welcher schlauchförmig ausgebildet ist, wobei der Schlauch engere und breitere Stellen hat. Über Reißnähte wird der Gassack im nicht aufgeblasenen Zustand in einer bandförmigen Gestalt gehalten.

Die nachveröffentlichte WO-A-96/26087, die als nachveröffentlichter Stand der Technik für die Vertragsstaaten DE, FR, GB, ES gilt, zeigt einen die Seitenscheiben des Fahrzeugs großteils abdeckenden Gassack, der einen Kopfschutz bietet. Der Gassack ist über seinen gesamten oberen Rand am Dachrahmen befestigt.

Aufgabe der Erfindung ist es, einen einfach aufgebauten und kostengünstigen Gassack zu schaffen, der sich beim Aufblasen in seiner Längsrichtung stark verkürzt.

Diese Aufgabe wird bei einem Gassack nach Anspruch 1 gelöst. Der erfindungsgemäße Gassack weist mindestens ein ihn in aufgeblasenem Zustand im wesentlichen quer zur Längsrichtung einschnürendes Element auf. Durch das einschnürende Element wird die Außenhaut des Gassacks im aufgeblasenen Zustand mehr oder weniger stark gewölbt, so daß die Gesamtlänge des zuvor bogenförmig verlegten Gassacks abnimmt und dieser geradlinig zwischen den Befestigungsstellen verspannt wird, insbesondere bei Verwendung von mehreren einschnürenden Elementen. Eine Kunststoffhülse, über die der Gassack hinter der Verkleidung am Fahrzeug befestigt ist, erleichtert die Montage.

Das einschnürende Element kann z.B. ein separates Gewebeteil sein, das am Gassack befestigt ist, oder ein besonders gewobener Wandungsabschnitt.

Gemäß einer bevorzugten Ausführungsform ist das einschnürende Element schnur- oder bandförmig ausgebildet.

Das einschnürende Element sollte den Strömungsquerschnitt im Inneren des Gassacks nicht so weit einengen, daß dadurch die Aufblaszeit eines Gassacks stark erhöht wird.

Es ist darüber hinaus auch möglich, ein Gassackgewebe zu verwenden, dessen Webrichtung unter 45° zur Längserstreckung des Gassacks verläuft. Ein derartiges Gassackgewebe führt zu einer Verkürzung des Gassacks in Längsrichtung beim Aufblasen. Durch die Kombination eines so ausgebildeten Gassackgewebes mit einschnürenden Elementen lassen sich besonders starke Verkürzungen des Gassacks erreichen.

Der erfindungsgemäße Gassack ist in einer Seitenaufprall-Schutzeinrichtung einsetzbar, wobei er an seinen entgegengesetzten seitlichen Enden am Dachrahmen und an der A-Säule eines Fahrzeugs befestigt ist und in zusammengefaltetem Zustand unter einer Abdeckung längs des Dachrahmens und der A-Säule verläuft.

Weitere Merkmale und Vorteile der Erfindung ergeben sich aus der folgenden Beschreibung und aus den Zeichnungen, auf die Bezug genommen wird. In den Zeichnungen zeigen:
- Fig. 1 eine schematische Seitenansicht einer nicht zur Erfindung gehörenden Ausführungsform des Gassacks in aufgeblasenem Zustand als Teil einer Seitenaufprall-Schutzeinrichtung;
- Fig. 2 einen Schnitt längs der Linie A-A nach Fig. 1 durch einen Dachrahmen mit dem zusammengefalteten, nicht zur Erfindung gehörenden Gassack; und
- Fig. 3 eine Ausführungsform des erfindungsgemäßen Gassacks, der kissenförmig ausgebildet ist und entsprechend Figur 2 im nicht aufgeblasenen Zustand unter einer Abdeckung im Fahrzeug versteckt ist.

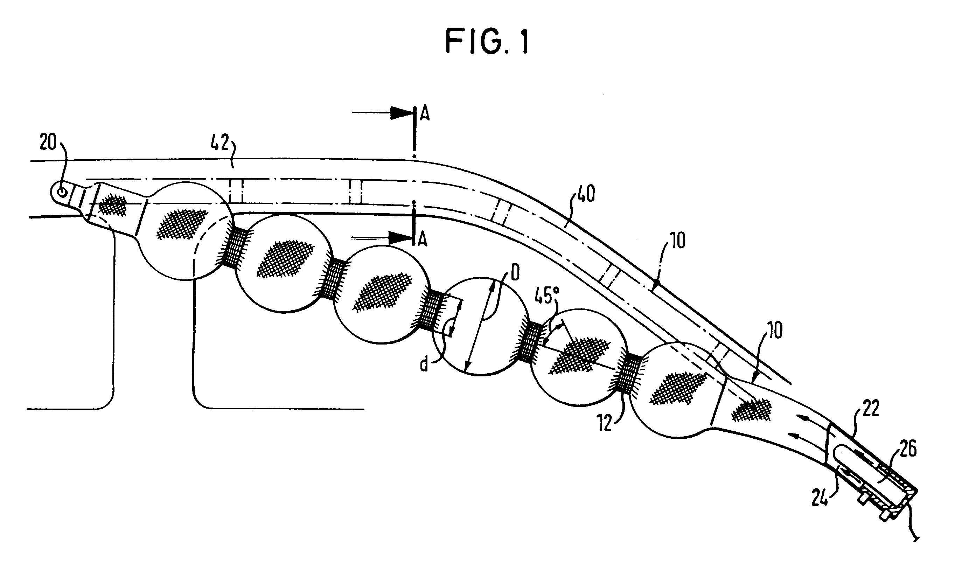

In Fig. 1 ist eine Seitenaufprall-Schutzeinrichtung mit einem Gasgenerator 26 und einem schlauchartigen Gassack 10 gezeigt. Der Gassack 10 ist mit seinen seitlichen Enden einerseits am unteren Ende der A-Säule 40 und andererseits am Dachrahmen 42 im Bereich der B-Säule eines Fahrzeugs befestigt. Entsprechende Befestigungsstellen sind mit 22 bzw. 20 bezeichnet. An der A-Säule 40 ist auch der Gasgenerator 26 befestigt, der durch eine Gaseintrittsöffnung 24 im Gassack 10 in dessen Inneres ragt.

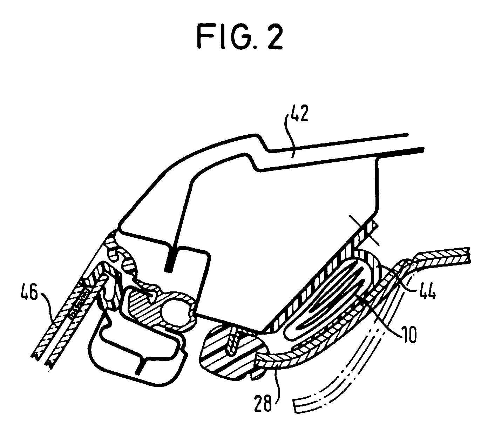

Im nicht aufgeblasenen Zustand ist der Gassack 10 unter einer Verkleidung 28 versteckt, wie Fig. 2 zu entnehmen ist. Der Gassack erstreckt sich dabei von der Befestigungsstelle 22 längs der A-Säule 40 und des Dachrahmens 42, wie in Fig. 1 mit strichpunktierten Linien gezeigt, bis hinter die B-Säule zur Befestigungsstelle 20.

Die Lagefixierung des zusammengefalteten Gassacks 10 hinter der Verkleidung 28 erfolgt über eine Kunststoffhülse 44, die ein offenes Längsende hat, welches zu einer Seitenscheibe 46 weist. Der Gassack 10 weist in regelmäßigen Abständen mehrere Einschnürungen auf, die durch Elemente 12 hervorgerufen werden, die den Gassack 10 ringförmig umgeben. Die Elemente 12 bestehen aus einem möglichst geringfügig dehnbaren Gewebeband, welches an der Wandung des Gassacks 10 befestigt ist. Darüber hinaus können die Elemente 12 auch aus Kunststoff sein oder in die Gassackwandung eingewoben sein. Ferner ist es möglich, daß ein Wandungsabschnitt 10 im Bereich der Elemente 12 besonders gewoben ist, so daß er in aufgeblasenem Zustand in diesem Bereich nicht den gesamten Gassackdurchmesser D, sondern einen verringerten Durchmesser d einnehmen kann, der etwa ein Drittel so groß ist wie der maximale Durchmesser D im nicht eingeschnürten Bereich.

Die Webrichtung der aus einem textilen Gewebe bestehenden Wandung verläuft unter 45° zur Längsrichtung des Gassacks 10 und fördert dadurch beim Aufblasen eine Verkürzung des Gassacks 10 in Längsrichtung zusammen mit den Elementen 12.

Im Falle eines Seitenaufpralls strömt vom Gasgenerator 26 erzeugtes Gas ins Innere des Gassacks 10. Der Gassack 10 verkürzt sich in Längsrichtung, so daß er die Befestigungsstellen 20, 22 auf möglichst kurzem Weg überbrückt. Zwischen den einzelnen Elementen 12 ergeben sich, je nach Abstand der Elemente 12, kugel- oder zylinderförmige Abschnitte.

Die Elemente 12 müssen nicht in regelmäßigen Abständen angeordnet sein, sondern sollen auf die Befestigungsstellen 20, 22 und die Gasgeneratorbefestigung sowie auf die Sitzposition im Verhältnis zur Gassacklage abgestimmt werden. Es können auch unterschiedliche Elemente 12 verwendet werden, die den Gassack 10 an unterschiedlichen Stellen verschieden stark einschnüren. Im Bereich des Kopfes eines Fahrzeuginsassen ist dabei eine weniger starke Einschnürung vorteilhaft, während z.B. zu den Befestigungsstellen 20, 22 hin stärkere Einschnürungen vorgesehen sein können. Der in Fig. 1 gezeigte Gassack 10 benötigt die Seitenscheibe nicht als Abstützung, da er in Längsrichtung zwischen den Befestigungsstellen 20 und 22 verspannt ist.

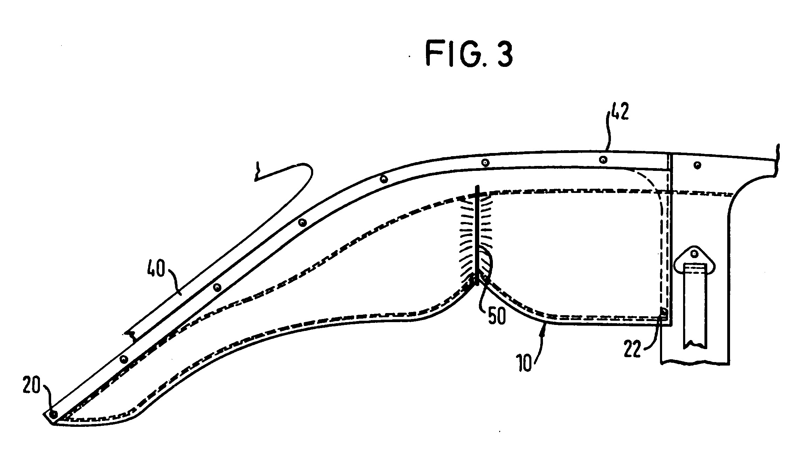

In der in Fig. 3 gezeigten Ausführungsform ist der Gassack 10 nicht schlauchartig, sondern kissenförmig ausgeführt. Er erstreckt sich in aufgeblasenem Zustand vom unteren Ende der A-Säule 40 bis zur B-Säule und ist in nicht aufgeblasenem Zustand, entsprechend Fig. 2, unter einer Abdeckung 28 versteckt. Damit ist er ebenfalls bogenförmig im Fahrzeug eingebaut. Im Gegensatz zu der in Fig. 1 gezeigten Ausführungsform sind jedoch mehr als zwei Befestigungsstellen 20, 22 vorgesehen. Beim Entfalten des Gassacks 10 verkürzt sich dieser hauptsächlich im Bereich von dessen unterem Rand so stark aufgrund einer in die Gassackwandung eingewobenen Schnur als einschnürendes Element 50, daß der Gassack 10 die Abdeckung 28 aus ihrer Befestigung herausreißt und die äußersten Befestigungsstellen 20, 22 auf einem kürzeren Weg überbrückt. Ein weiterer Unterschied zwischen der in den Fig. 1 und 2 und der in Fig. 3 gezeigten Ausführungsform besteht darin, daß das einschnürende Element 50 den kissenförmigen Gassack 10 gemäß Fig. 3 nicht ringförmig umgibt, sondern nur dessen unteren Randbereich einschnürt.

Beiden Ausführungsformen ist gemeinsam, daß sich die einschnürenden Elemente 12, 50 im wesentlichen quer zur Längsrichtung des Gassacks 10 erstrecken.

## Patentansprüche (Patentansprüche für folgende(n) Vertragsstaat(en): DE, FR, GB, ES)

1. Seitengassack-Rückhaltcsystem, mit
einem die Seitenscheibe eines Fahrzeugs zumindest teilweise abdeckenden Gassack (10),
der, bezogen auf den aufgeblasenen und eingehauten Zustand, einen unteren Rand mit zwei Längsenden hat und
im zusammengefalteten Zustand zwischen Befestigungsstellen (20, 22) bogenförmig im Fahrzeug einzubauen ist,
wobei das vordere Längsende mit einer Befestigungsstelle an der A-Säule (40) des Fahrzeugs verbunden ist und
das hintere Längsende mit einer Befestigungsstelle (22) am Fahrzeug verbunden ist,
dadurch gekennzeichnet, daß
der Gassack (10) flächig ausgebildet ist und
wenigstens ein den unteren Rand im aufgeblasenen Zustand im wesentlichen quer zur Längsrichtung des aufgeblasenen Gassacks (10) einschnürendes Element (50) aufweist,
das an der Wandung des Gassacks (10) befestigt ist und
durch das sich die Längserstreckung des Gassacks (10) an seinem unteren Rand verringert, und
daß der Gassack (10) über eine Kunststoffhülse (44) hinter einer Verkleidung (28) am Fahrzeug befestigt ist.

2. Seitengassack-Rückhaltesystem nach Anspruch 1, dadurch gekennzeichnet, daß das einschnürende Element (50) schnur- oder bandförmig ausgebildet ist.

3. Seitengassack-Rückhaltesystcm nach einem der vorstehenden Ansprüche, dadurch gekennzeichnet, daß das einschnürende Element (50) ein besonders gewobener Wandungsabschnitt oder in die Gassackwandung eingewoben ist.

4. Seitengassack-Rückhaltesystem nach einem der vorstehenden Ansprüche, dadurch gekennzeichnet, daß das einschnürende Element aus Kunststoff oder Gewebematerial hergestellt ist.

5. Seitengassack-Rückhaltesystem nach einem der vorstehenden Ansprüche, dadurch gekennzeichnet, daß die Wandung des Gassacks aus einem textilen Gewebe besteht, dessen Webrichtung unter 45° zur Längsrichtung des Gassacks verläuft.

6. Seitengassack-Rückhaltesystem nach einem der vorstehenden Ansprüche, dadurch gekennzeichnet, daß an einem seiner seitlichen Enden eine Gaseintrittsöffnung (24) zum Anschluß eines Gasgenerators (16) vorgesehen ist.

7. Seitengassack-Rückhaltesystem nach einem der vorstehenden Ansprüche, dadurch gekennzeichnet, daß der Gassack (10) mit seinem hinteren Längsende am Dachrahmen (42) oder der B-Säule befestigt ist.

8. Seitengassack-Rückhaltesystem nach einem der vorstehenden Ansprüche dadurch gekennzeichnet, daß sich der Gassack (10) zwischen den Befestigungsstellen (20, 22) im Bereich seines unteren Randes verspannt.

9. Seitengassack-Rückhaltesystem nach einem der vorstehenden Ansprüche, dadurch gekennzeichnet, daß das einschnürende Element (50) den Gassack nur im Bereich von dessen unterem Rand einschnürt.

10. Seitengassack-Rückhaltesystem nach einem der vorstehenden Ansprüche, dadurch gekennzeichnet, daß das einschnürende Element (50) dem Gassack (10) eine gewölbte Gestalt gibt.

11. Seitengassack-Rückhaltesystem nach einem der vorstehenden Ansprüche, dadurch gekennzeichnet, daß die Befestigungsstellen (20, 22) fahrzeugfeste Punkte sind.

## Patentansprüche (Patentansprüche für folgende(n) Vertragsstaat(en): IT, SE)

1. Seitengassack-Rückhaltesystem, mit
einem die Seitenscheibe eines Fahrzeugs zumindest teilweise abdeckenden Gassack (10),
der, bezogen auf den aufgeblasenen und eingebauten Zustand, einen unteren Rand mit zwei Längsenden hat und
im zusammengefalteten Zustand zwischen Befestigungsstellen (20, 22) bogenförmig im Fahrzeug einzubauen ist,
wobei das vordere Längsende mit einer Befestigungsstelle an der A-Säule (40) des Fahrzeugs verbunden ist und
das hintere Längsende mit einer Befestigungsstelle (22) am Fahrzeug verbunden ist,
dadurch gekennzeichnet, daß
der Gassack (10) flächig ausgebildet ist und
wenigstens ein den unteren Rand im aufgeblasenen Zustand im wesentlichen quer zur Längsrichtung des aufgeblasenen Gassacks (10) einschnürendes Element (50) aufweist,
das an der Wandung des Gassacks (10) befestigt ist und
durch das sich die Längserstreckung des Gassacks (10) an seinem unteren Rand verringert.

2. Seitengassack-Rückhaltesystem nach Anspruch 1, dadurch gekennzeichnet, daß das einschnürende Element (50) schnur- oder bandförmig ausgebildet ist.

3. Seitengassack-Rückhaltesystem nach einem der vorstehenden Ansprüche, dadurch gekennzeichnet, daß das einschnürende Element (50) ein besonders gewobener Wandungsabschnitt oder in die Gassackwandung eingewoben ist.

4. Seitengassack-Rückhaltesystem nach einem der vorstehenden Ansprüche, dadurch gekennzeichnet, daß das einschnürende Element aus Kunststoff oder Gewebematerial hergestellt ist.

5. Seitengassack-Rückhaltesystem nach einem der vorstehenden Ansprüche, dadurch gekennzeichnet, daß die Wandung des Gassacks aus einem textilen Gewebe besteht, dessen Webrichtung unter 45° zur Längsrichtung des Gassacks verläuft.

6. Seitengassack-Rückhaltesystem nach einem der vorstehenden Ansprüche, dadurch gekennzeichnet, daß an einem seiner seitlichen Enden eine Gaseintrittsöffnung (24) zum Anschluß eines Gasgenerators (16) vorgesehen ist.

7. Seitengassack-Rückhaltesystem nach einem der vorstehenden Ansprüche, dadurch gekennzeichnet, daß der Gassack (10) mit seinem hinteren Längsende am Dachrahmen (42) oder der B-Säule befestigt ist.

8. Seitengassack-Rückhaltesystem nach einem der vorstehenden Ansprüche dadurch gekennzeichnet, daß sich der Gassack (10) zwischen den Befestigungsstellen (20, 22) im Bereich seines unteren Randes verspannt.

9. Seitengassack-Rückhaltesystem nach einem der vorstehenden Ansprüche, dadurch gekennzeichnet, daß das einschnürende Element (50) den Gassack nur im Bereich von dessen unterem Rand einschnürt.

10. Seitengassack-Rückhaltesystem nach einem der vorstehenden Ansprüche, dadurch gekennzeichnet, daß das einschnürende Element (50) dem Gassack (10) eine gewölbte Gestalt gibt.

11. Seitengassack-Rückhaltesystem nach einem der vorstehenden Ansprüche, dadurch gekennzeichnet, daß die Befestigungsstellen (20, 22) fahrzeugfeste Punkte sind.

12. Seitengassack-Rückhaltesystem nach einem der vorstehenden Ansprüche, dadurch gekennzeichnet, daß der Gassack (10) über eine Kunststoffhülse (44) hinter einer Verkleidung (28) am Fahrzeug befestigt ist.

## Claims (Claims for the following Contracting State(s): DE, FR, GB, ES)

1. A side gas bag restraint system, comprising
a gas bag (10) which at least partially covers the side window of a vehicle and,
in the inflated and installed condition, has a lower edge with two longitudinal ends and
in the folded condition is to be mounted bow-shaped between two securing sites (20, 22) in the vehicle,
the front longitudinal end being connected with a securing site at the A-column (40) of the vehicle and
the rear longitudinal end being connected with a securing site (22) at the vehicle, characterized in that
the gas bag (10) is configured so as to have a large area and comprises at least one element (50) constricting, in the inflated condition, the lower edge essentially transverse to the longitudinal direction of the inflated gas bag (10),
the constricting element being secured to the wall of the gas bag (10) and
reducing the longitudinal extent of the gas bag (10) at its lower edge, and
that the gas bag (10) is secured to the vehicle via a plastic sleeve (44) behind a lining (28).

2. The side gas bag restraint system according to claim 1, characterized in that the constricting element (50) is configured in the form of a cord or band.

3. The side gas bag restraint system according to any of the preceding claims, characterized in that the constricting element (50) is a separately woven wall section or is interwoven in the gas bag wall.

4. The side gas bag restraint system according to any of the preceding claims, characterized in that the constricting element is made of plastics or fabric material.

5. The side gas bag restraint system according to any of the preceding claims, characterized in that the wall of the gas bag consists of a textile fabric, the weaving direction of which is oriented at 45° to the longitudinal direction of the gas bag.

6. The side gas bag restraint system according to any of the preceding claims, characterized in that on one of its lateral ends a gas inlet port (24) is provided for the connection to a gas generator (16).

7. The side gas bag restraint system according to any of the preceding claims, characterized in that the gas bag (10) is secured with its rear longitudinal end to the roof frame (42) or the B-column.

8. The side gas bag restraint system according to any of the preceding claims, characterized in that the gas bag (10) tensions itself between the securing sites (20, 22) in the region of its lower edge.

9. The side gas bag restraint system according to any of the preceding claims, characterized in that the constricting element (50) constricts the gas bag only in the region of the lower edge of the latter.

10. The side gas bag restraint system according to any of the preceding claims, characterized in that by the constricting element (50) the gas bag (10) receives a bulged form.

11. The side gas bag restraint system according to any of the preceding claims, characterized in that the securing sites (20, 22) are vehicle-fixed points.

## Claims (Claims for the following Contracting State(s): IT, SE)

1. A side gas bag restraint system, comprising
a gas bag (10) which at least partially covers the side window of a vehicle and,
in the inflated and installed condition, has a lower edge with two longitudinal ends and
in the folded condition is to be mounted bow-shaped between two securing sites (20, 22) in the vehicle,
the front longitudinal end being connected with a securing site at the A-column (40) of the vehicle and
the rear longitudinal end being connected with a securing site (22) at the vehicle,
characterized in that
the gas bag (10) is configured so as to have a large area and comprises at least one element (50) constricting, in the inflated condition, the lower edge essentially transverse to the longitudinal direction of the inflated gas bag (10),
the constricting element being secured to the wall of the gas bag (10) and
reducing the longitudinal extent of the gas bag (10) at its lower edge.

2. The side gas bag restraint system according to claim 1, characterized in that the constricting element (50) is configured in the form of a cord or band.

3. The side gas bag restraint system according to any of the preceding claims, characterized in that the constricting element (50) is a separately woven wall section or is interwoven in the gas bag wall.

4. The side gas bag restraint system according to any of the preceding claims, characterized in that the constricting element is made of plastics or fabric material.

5. The side gas bag restraint system according to any of the preceding claims, characterized in that the wall of the gas bag consists of a textile fabric, the weaving direction of which is oriented at 45° to the longitudinal direction of the gas bag.

6. The side gas bag restraint system according to any of the preceding claims, characterized in that on one of its lateral ends a gas inlet port (24) is provided for the connection to a gas generator (16).

7. The side gas bag restraint system according to any of the preceding claims, characterized in that the gas bag (10) is secured with its rear longitudinal end to the roof frame (42) or the B-column.

8. The side gas bag restraint system according to any of the preceding claims, characterized in that the gas bag (10) tensions itself between the securing sites (20, 22) in the region of its lower edge.

9. The side gas bag restraint system according to any of the preceding claims, characterized in that the constricting element (50) constricts the gas bag only in the region of the lower edge of the latter.

10. The side gas bag restraint system according to any of the preceding claims, characterized in that by the constricting element (50) the gas bag (10) receives a bulged form.

11. The side gas bag restraint system according to any of the preceding claims, characterized in that the securing sites (20, 22) are vehicle-fixed points.

12. The side gas bag restraint system according to any of the preceding claims, characterized in that the gas bag (10) is secured to the vehicle via a plastic sleeve (44) behind a lining (28).

## Revendications (Revendications pour l'(les) Etat(s) contractant(s) suivant(s): DE, FR, GB, ES)

1. Système de retenue à coussin à gaz latéral, comprenant
un coussin à gaz (10) recouvrant au moins partiellement la vitre latérale d'un véhicule,
qui, présente à l'état gonflé et monté un bord inférieur à deux extrémités longitudinales et
qui, à l'état replié, est à monter sous une forme arquée entre des points de fixation (20, 22) dans le véhicule,
l'extrémité longitudinale antérieure étant fixée par un point de fixation à la colonne A (40) du véhicule et
l'extrémité longitudinale postérieure étant fixée par un point de fixation (22) au véhicule,
caractérisé en ce que
le coussin à gaz (10) est réalisé plan et
à l'état gonflé, il présente au moins un élément (50) qui étrangle le bord inférieur de façon sensiblement transversale à la direction longitudinale du coussin à gaz (10) gonflé,
qui est fixé sur la paroi du coussin à gaz (10) et
au moyen duquel l'étendue longitudinale du coussin à gaz (10) est diminuée au niveau de son bord inférieur, et
en ce que le coussin à gaz (10) est fixé au véhicule, derrière un revêtement (28), au moyen d'un manchon en matière plastique (44).

2. Système de retenue à coussin à gaz latéral selon la revendication 1, caractérisé en ce que l'élément d'étranglement (50) est réalisé sous forme de cordon ou de ruban.

3. Système de retenue à coussin à gaz latéral selon l'une des revendications précédentes, caractérisé en ce que l'élément d'étranglement (50) est une portion de paroi à tissage spécial ou est tissé dans la paroi du coussin à gaz.

4. Système de retenue à coussin à gaz latéral selon l'une des revendications précédentes, caractérisé en ce que l'élément d'étranglement est fabriqué en matière plastique ou en matériau tissé.

5. Système de retenue à coussin à gaz latéral selon l'une des revendications précédentes, caractérisé en ce que la paroi du coussin à gaz est constituée d'un tissu textile dont le sens de tissage s'étend à 45° par rapport à la direction longitudinale du coussin à gaz.

6. Système de retenue à coussin à gaz latéral selon l'une des revendications précédentes, caractérisé en ce qu'un orifice d'entrée de gaz (24) servant à raccorder un générateur de gaz (26) est prévu à l'une de ses extrémités latérales.

7. Système de retenue à coussin à gaz latéral selon l'une des revendications précédentes, caractérisé en ce que le coussin à gaz (10) est fixé par son extrémité longitudinale postérieure au cadre du toit (42) ou à la colonne B.

8. Système de retenue à coussin à gaz latéral selon l'une des revendications précédentes, caractérisé en ce que le coussin à gaz (10) devient tendu entre les points de fixation (20, 22) dans la zone de son bord inférieur.

9. Système de retenue à coussin à gaz latéral selon l'une des revendications précédentes, caractérisé en ce que l'élément d'étranglement (50) étrangle le coussin à gaz seulement dans la zone du bord inférieur de ce dernier.

10. Système de retenue à coussin à gaz latéral selon l'une des revendications précédentes, caractérisé en ce que l'élément d'étranglement (50) confère au coussin à gaz (10) une forme arquée.

11. Système de retenue à coussin à gaz latéral selon l'une des revendications précédentes, caractérisé en ce que les points de fixation (20, 22) sont des points solidaires du véhicule.

## Revendications (Revendications pour l'(les) Etat(s) contractant(s) suivant(s): IT, SE)

1. Système de retenue à coussin à gaz latéral, comprenant
un coussin à gaz (10) recouvrant au moins partiellement la vitre latérale d'un véhicule,
qui, présente à l'état gonflé et monté un bord inférieur à deux extrémités longitudinales et
qui, à l'état replié, est à monter sous une forme arquée entre des points de fixation (20, 22) dans le véhicule,
l'extrémité longitudinale antérieure étant fixée par un point de fixation à la colonne A (40) du véhicule et
l'extrémité longitudinale postérieure étant fixée par un point de fixation (22) au véhicule,
caractérisé en ce que
le coussin à gaz (10) est réalisé plan et
à l'état gonflé, il présente au moins un élément (50) qui étrangle le bord inférieur de façon sensiblement transversale à la direction longitudinale du coussin à gaz (10) gonflé,
qui est fixé sur la paroi du coussin à gaz (10) et
au moyen duquel l'étendue longitudinale du coussin à gaz (10) est diminuée au niveau de son bord inférieur.

2. Système de retenue à coussin à gaz latéral selon la revendication 1, caractérisé en ce que l'élément d'étranglement (50) est réalisé sous forme de cordon ou de ruban.

3. Système de retenue à coussin à gaz latéral selon l'une des revendications précédentes, caractérisé en ce que l'élément d'étranglement (50) est une portion de paroi à tissage spécial ou est tissé dans la paroi du coussin à gaz.

4. Système de retenue à coussin à gaz latéral selon l'une des revendications précédentes, caractérisé en ce que l'élément d'étranglement est fabriqué en matière plastique ou en matériau tissé.

5. Système de retenue à coussin à gaz latéral selon l'une des revendications précédentes, caractérisé en ce que la paroi du coussin à gaz est constituée d'un tissu textile dont le sens de tissage s'étend à 45° par rapport à la direction longitudinale du coussin à gaz.

6. Système de retenue à coussin à gaz latéral selon l'une des revendications précédentes, caractérisé en ce qu'un orifice d'entrée de gaz (24) servant à raccorder un générateur de gaz (26) est prévu à l'une de ses extrémités latérales.

7. Système de retenue à coussin à gaz latéral selon l'une des revendications précédentes, caractérisé en ce que le coussin à gaz (10) est fixé par son extrémité longitudinale postérieure au cadre du toit (42) ou à la colonne B.

8. Système de retenue à coussin à gaz latéral selon l'une des revendications précédentes, caractérisé en ce que le coussin à gaz (10) devient tendu entre les points de fixation (20, 22) dans la zone de son bord inférieur.

9. Système de retenue à coussin à gaz latéral selon l'une des revendications précédentes, caractérisé en ce que l'élément d'étranglement (50) étrangle le coussin à gaz seulement dans la zone du bord inférieur de ce dernier.

10. Système de retenue à coussin à gaz latéral selon l'une des revendications précédentes, caractérisé en ce que l'élément d'étranglement (50) confère au coussin à gaz (10) une forme arquée.

11. Système de retenue à coussin à gaz latéral selon l'une des revendications précédentes, caractérisé en ce que les points de fixation (20, 22) sont des points solidaires du véhicule.

12. Système de retenue à coussin à gaz latéral selon l'une des revendications précédentes, caractérisé en ce que le coussin à gaz (10) est fixé au véhicule, derrière un revêtement (28), au moyen d'un manchon en matière plastique (44).
